# EUROPÄISCHE PATENTSCHRIFT

(11) **EP 0 519 179 B1**
(45) Veröffentlichungstag und Bekanntmachung des Hinweises auf die Patenterteilung: **22.02.1995**
(21) Anmeldenummer: 92106714.6
(22) Anmeldetag: 18.04.1992
(51) Int. Cl.: B60R 16/04, B60T 13/66, H02J 7/14

(54) **Zweikreisige Spannungsversorgungsschaltung für Fahrzeuge**
Two-circuit power supply for vehicles
Couplage d'alimentation en courant à deux circuits pour véhicules

(30) Priorität: 20.06.1991 DE 4120337
(43) Veröffentlichungstag der Anmeldung: 23.12.1992
(73) Patentinhaber: WABCO STANDARD GmbH, D-53008 Bonn (DE)
(72) Erfinder: Neuhaus, Detlev, W-3000 Hannover (DE)
(74) Vertreter: Schrödter, Manfred, Dipl.-Ing.

(56) Entgegenhaltungen:
- DE-A- 1 413 590
- DE-A- 3 502 100
- DE-A- 3 907 762
- US-A- 4 788 486

## Beschreibung

Die Erfindung bezieht sich auf eine zweikreisige Spannungsversorgungsschaltung für Fahrzeuge, insbesondere für Fahrzeuge mit einer zweikreisigen elektrischen Bremsanlage gemäß dem Oberbegriff des Patentanspruchs 1.

Elektrische Bremsanlagen werden als zukünftige Alternative zu konventionellen Bremsanlagen angesehen. Bei elektrischen Bremsanlagen erfolgt die Übertragung des Bremsanforderungssignals (Betätigung des Bremspedales durch den Fahrer) nicht, wie bisher (z.B. in Nutzkraftfahrzeugen) üblich, auf pneumatischem oder hydraulischem Wege, sondern mittels elektrischer Stromleitungen. Hierdurch erhöht sich die Übertragungsgeschwindigkeit des Bremssignals, und darüber hinaus können weiter für die Bremsung wichtige Randbedingungen und Funktionen, wie Beladung, Bremsbelagverschleiß, Blockierschutz, usw. berücksichtigt werden.

Die eigentliche Bremskraft wird dabei nach wie vor durch einen pneumatischen oder hydraulischen Druckmittelvorrat über Leitungen und Bremszylinder aufgebracht.

Die Bremsanlage ist naturgemäß das für die Fahrsicherheit des Fahrzeuges wichtigste Teil. Auch bei voll elektronischen zweikreisigen Bremssystemen ist deshalb die Verwendung von getrennten Energiespeichern vorgeschrieben. Dies gilt sowohl für die pneumatische bzw. hydraulische Versorgung, als auch für die elektrischen Energiespeicher (Batterien). Die Nachspeisung der elektrischen Energiespeicher erfolgt dabei in zulässiger Weisedurch eine gemeinsame Energiequelle (Generator). Die Aufladung der elektrischen Energiespeicher muß aus Sicherheitsgründen rückwirkungsfrei ausgeführt sein, d.h. daß sich ein Fehler, beispielsweise ein Kurzschluß, in dem einen elekrischen Energiespeicher nicht auf den anderen elektrischen Energiespeicher auswirken darf.

Aus der DE-A 35 02 100 ist eine Spannungsversorgungsschaltung der eingangs genannten Art bekannt. Bei dieser ist eine Spannungsüberwachung für die Zusatzbatterie vorgesehen. Weiter ist eine Umschalteinrichtung eingebaut, wodurch bei Ausfall einer Batterie beide Kreise von der noch intakten anderen Batterie versorgt werden können.

Nachteilig an der bekannten Schaltung ist, daß bei Ausfall der Starterbatterie die Ladung der Zusatzbatterie nicht immer gewährleistet ist. Außerdem ist ein relativ großer Aufwand (Dioden) für die Trennung der beiden Batterien notwendig. Der wesentliche Nachteil der Diodensteuerung ist, daß die Zusatzbatterie um die Diodenflußspannung reduzierte Ladespannung des Hauptkreises erhält, und somit stets nur teilgeladen wird.

Der Erfindung liegt die Aufgabe zugrunde, eine Spannungsversorgungsschaltung der eingangs genannten Art so auszubilden, daß bei geringem technischen Aufwand eine sichere elektrische Trennung von erstem Kreis (Starterbatterie) und zweitem Kreis (Zusatzbatterie) gewährleistet ist und eine gleichmäßige Ladung beider Energiespeicher erreicht wird.

Diese Aufgabe wird durch die im Patentanspruch 1 enthaltene Erfindung gelöst. Die Unteransprüche enthalten zweckmäßige Weiterbildungen der Erfindung.

Die Erfindung wird im folgenden anhand einer Zeichnung näher erläutert. Die Zeichnung zeigt in
- **Fig.1**: ein Prinzipschaltbild der erfindungsgemäßen Spannungsversorgungsschaltung, in
- **Fig.2**: ein Schaltbild einer heute üblichen Generator-Regler-Schaltung, und in
- **Fig.3**: ein Schaltbild des Überwachungs-Moduls.

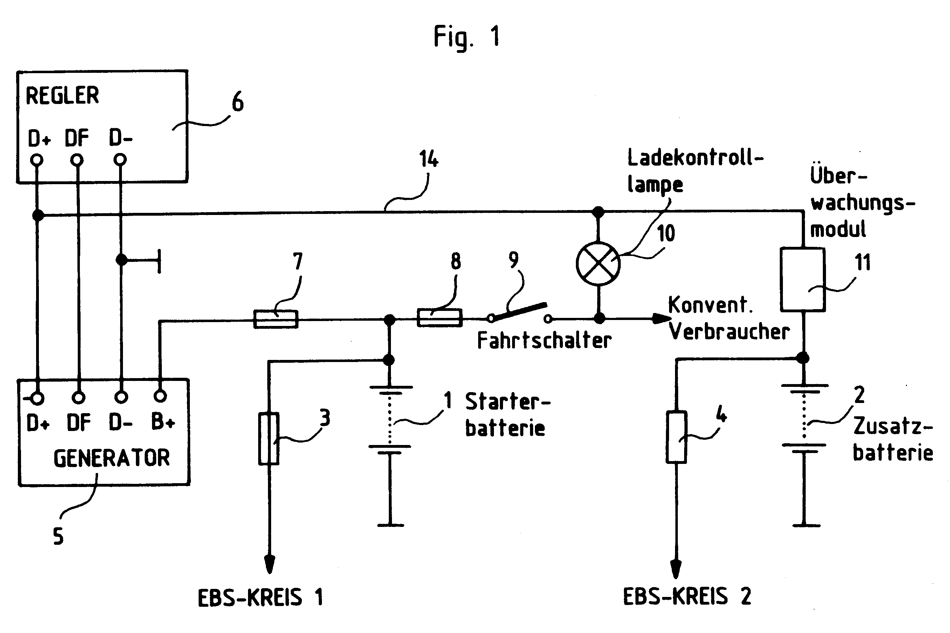

Das in der Fig.1 schematisch dargestellte Schaltbild der erfindungsgemäßen Spannungsversorgungsschaltung enthält eine Starterbatterie (1) und eine Zusatzbatterie (2). Die Starterbatterie (1) liefert über eine Sicherung (8) sowie einen Fahrtschalter (9) den Strom zu den konventionellen Verbrauchern des Fahrzeugs.

Nicht dargestellt ist hier die Versorgung des Anlassers, welcher meist über einen separaten Magnetschalter betätigt wird.

An die Starterbatterie (1) ist über eine weitere Sicherung (3) der erste Kreis einer zweikreisigen elektrischen Bremsanlage (EBS) angeschlossen.

Weiter ist im Fahrzeug eine Zusatzbatterie (2) eingebaut, an welche über eine weitere Sicherung (4) der zweite Kreis der elektrischen Bremsanlage (EBS) angeschlossen ist.

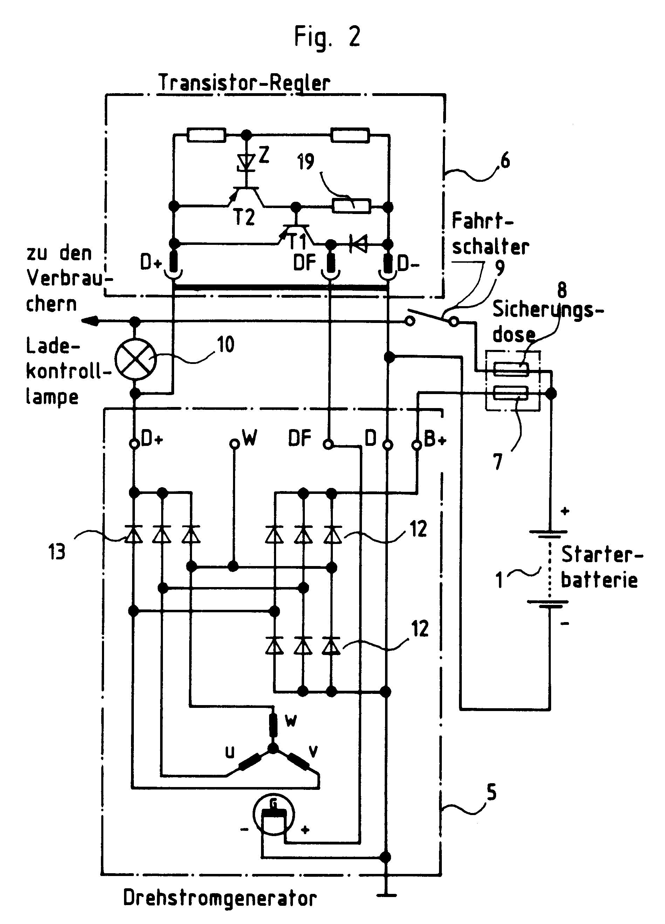

Beide Batterien (1) und (2) müssen nun vom Generator (5) des Fahrzeugs ständig aufgeladen werden. Dies erfolgt für die Starterbatterie (1) über eine weitere Sicherung (7) von der Klemme (B+) des Generators (5) aus. Weitere Klemmen (D+), (DF) und (D-) sind an entsprechende Klemmen eines Reglers (6) angeschlossen. Generator (5) und Regler (6) sind standardisierte Bauteile, welche weiter unten anhand der Fig.2 näher erläutert werden.

Zur Überwachung des Ladevorgangs der Starterbatterie (1) dient eine Ladekontrollampe (10). Diese ist mit einem Anschluß an den Fahrtschalter (9) und mit dem anderen Anschluß über eine Leitung (14) an den Anschluß (D+) des Reglers (6) bzw. Generators (5) angeschlossen. Die Ladekontrollampe (10) leuchtet, wenn bei stehendem Motor der Fahrtschalter (9) eingeschaltet wird. Die Ladekontrollampe (10) erlischt, wenn bei laufendem Motor eine Erregerspannung an der Klemme (D+) erzeugt wird, welche die Batteriespannung übersteigt.

Erfindungsgemäß ist nun die Zusatzbatterie (2) über die Leitung (14) an die Klemme (D+) des Generators (5) und damit an die Erregerdioden (13) des Generators (5) angeschlossen (vergl. Fig.2). Zweckmäßigerweise ist zwischen der Klemme (D+) des Generators (5) undder Zusatzbatterie (2) noch ein Überwachungsmodul (11) (siehe unten) geschaltet.

Die heute in Kraftfahrzeugen gebräuchliche Schaltung zur Aufladung der Starterbatterie (1) ist in der Fig.2 näher dargestellt. Gleiche Bauteile sind mit gleichen Bzugszeichen wird Fig.1 bezeichnet. Als Generator (5) werden heute fast ausschließlich Drehstromgeneratoren benutzt. Deren Erregerwicklung (G) wird vom Anschluß (DF) des Reglers (6) gespeist. Der Regler (6) ist hier als Transistor-Regler ausgebildet.

Die Sekundärwicklung des Generators (uvw) ist in Sternschaltung ausgebildet und an Leistungsdioden (12) zur Speisung der Starterbatterie (1) angeschlossen. Weiter sind an die Sekundärwicklung sogenannte Erregerdioden (13) angeschlossen, welche den Strom zur Speisung der Erregerwicklung (G) liefern, solange die Batteriespannung niedrig ist.

Beginnt der Generator sich zu drehen, reicht der Restmagnetismus im Eisenkreis aus, um eine geringe Erregerspannung zu erzeugen. Diese wird dem Transistorregler (6) zugeführt, welcher daraufhin einen geringen Strom durch die Erregerwicklung (G) treibt. Dieser geringe Strom verstärkt das Magnetfeld, was eine weitere Erhöhung der Spannung nach sich zieht, so daß durch einen Aufschaukeleffekt bis zur Generatornennspannung der Generator sich aufschaukelt. Sobald die Nennspannung überschritten wird, sperrt der Transistorregler (6) die Erregung, so daß sich ein bestimmter Wert der Nennspannung einstellt.

Ein gebräuchlicher Transistorregler funktioniert in folgender Weise. Solange die Spannung am Punkt (D+) unter der Batterienennspannung der Starterbatterie (1) liegt, wird der Erregerstrom durch den Transistor (T1) durchgelassen, weil dessen Basis über einen Widerstand (19) an Minus (Masse) liegt. Während dieser Zeit sperrt der Transistor (T2), da eine an der Basis angeschlossene Zenerdiode (Z) noch sperrt. Sobald infolge der am Punkt (D+) anliegenden anwachsenden Nennspannung die Zenerdiode (Z) durchbricht, wird der Transistor (T2) leitend. Hierdurch wird positives Potential an die Basis des Transistors (T1) gelegt, wodurch dieser sperrt. Damit wird der Erregerstrom unterbrochen, und die Nennspannung sinkt wieder ab. Dieser Vorgang wiederholt sich ständig, so daß sich ein fester Nennspannungswert einregelt. Dieser Nennspannungswert wird also im wesentlichen durch das die Zenerdiode (2) enthaltende Netzwerk bestimmt.

Bei angeschlossener Starterbatterie (1) wird ein Teil des Erregerstromes für den Drehstromgenerator (5) auch von der Batterie (1) geliefert. Dieser Strom fließt über den Fahrtschalter (9), die Ladekontrollampe (10) und den Transistor (T1) zum Anschluß (DF) und damit über die Erregerwicklung (D) des Generators (5) zur Masse.

Nachdem so die Starterbatterie (1) aufgeladen ist, können die Erregerdioden (13) erfindungsgemäß zur Ladung der Zusatzbatterie (2) des zweiten Kreises der elektrischen Bremsanlage benutzt werden.

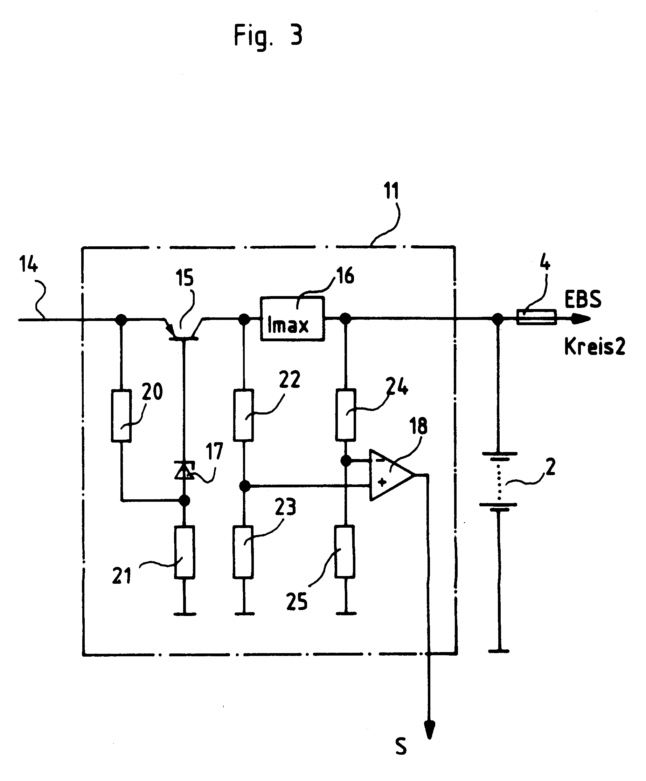

In der Fig.3 ist das in die Leitung (15) zur Zusatzbatterie (2) eingefügte Überwachungsmodul (11) näher dargestellt. Dieses dient zur weiteren Erhöhung der Sicherheit.

Zweckmäßigerweise sollte die Belastung der Erregerdioden (13) erst dann erfolgen, wenn der oben beschriebene Aufschaukel-Vorgang beendet ist und die Ladespannung ihren maximalen Wert erreicht hat. Zu diesem Zeitpunkt hat auch die Starterbatterie (1) ihre Nennspannung etwa erreicht, so daß der Regler (6) den Erregerstrom drosselt.

Diese Funktion wird durch einen Transistor (15), eine in die Basisleitung dieses Transistors eingefügte Zenerdiode (Z) (17), sowie eine Widerstandsschaltung (20), (21) erreicht. Der Transistor (15) schaltet erst dann durch, wenn die Spannung auf der Leitung (14) so weit angestiegen ist, daß die Zenerdiode (17) leitend wirkt. Hierdurch wird eine spannungsabhängige Zeitverzögerung für die Ladung der Zusatzbatterie (2) realisiert.

Um die Zusatzbatterie (2), welche naturgemäß erheblich kleiner ausgeführt ist als die Starterbatterie (1), vor einer Überladung zu schützen und um eine Überlastung der Erregerdioden (13) zu vermeiden, ist eine Ladestrombegrenzung (16) vorgesehen. Diese begrenzt den durchgehenden Strom auf einen Wert Iₘₐₓ. Der Wert von Iₘₐₓ liegt im vorliegenden Fall bei etwa 1 Ampere. Der interne Aufbau derartiger Strombegrenzungen ist dem Fachmann bekannt, und deshalb nicht näher dargestellt.

Die Zusatzbatterie (2) ist nur im Fall der Bremsbetätigung nennenswert belastet. Deshalb ist während der ungebremsten Fahrt überwiegend nur eine Erhaltungsladung mit geringem Ladestrom erforderlich.

Schließlich ist noch eine Ladungsüberwachung vorgesehen, welche aus zwei Spannungsteilern mit den Widerständen (22), (23) und (24), (25), sowie einem handelsüblichen Operationsverstärker (18) besteht. Mit der erwähnten Beschaltung wird der Einsatz der Ladestrombegrenzung (16) überwacht. Sobald die Begrenzung zu arbeiten beginnt, fällt an dem Baustein (16) eine Spannung ab. Diese wird von dem Operationsverstärker (Differenzverstärker) (18) erkannt und an einen Ausgang (S) weitergegeben. Dieser ist mit einer (nicht dargestellten) Auswerteschaltung, beispielsweise einem Mikrocontroller, verbunden.

Die am Ausgang (S) angeschlossene Auswerteschaltung mißt die Zeiten, an denen an die Ladestrombegrenzung (16) wirksam ist, und damit die Zusatzbatterie (2) mit maximalem Strom geladen wird. Der Ladestrom sinkt wieder ab, wenn die Zusatzbatterie (2) ihren Ladezustand erhöht.

Aus der Häufigkeit und der Zeitdauer der einzelnen Ladevorgänge der Zusatzbatterie (2) kann die an den Ausgang (S) angeschlossene Auswerteschaltung erkennen, ob die Zusatzbatterie (2) in Ordnung ist. Die Prüfung übernimmt eine entsprechende Software.

Durch die erfindungsgemäße Lösung der Aufladung der Zusatzbatterie für das elektrische Bremssystem wird eine gleichmäßige, rückwirkungsfreie Speisung der Zusatzbatterie erreicht. Im Vergleich zu anderen, bekannten Aufladeschaltungen ist hierzu nur ein geringer zusätzlicher technischer Aufwand notwendig.

## Patentansprüche

1. Zweikreisige Spannungsversorgungsschaltung für Fahrzeuge, insbesondere für Fahrzeuge mit einer zweikreisigen elektrischen Bremsanlage (EBS), mit einer Starterbatterie (1) und einer Zusatzbatterie (2), wobei beide Batterien (1, 2) von einem Drehstromgenerator (5) aufladbar sind und wobei der Drehstromgenerator (5) Leistungsdioden (12) und Erregerdioden (13) enthält, dadurch gekennzeichnet, daß die Zusatzbatterie (2) zur Aufladung über eine Leitung (14) an die Erregerdioden (13) angeschlossen ist.

2. Schaltung nach Anspruch 1, dadurch gekennzeichnet, daß die Zusatzbatterie (2) über ein Überwachungsmodul (11) an die Erregerdioden (13) angeschlossen ist.

3. Schaltung nach Anspruch 2, dadurch gekennzeichnet, daß das Überwachungsmodul (11) eine Ladestrombegrenzung (16) enthält.

4. Schaltung nach Anspruch 2, dadurch gekennzeichnet, daß das Überwachungsmodul (11) eine Ladungsüberwachung (18) enthält.

5. Schaltung nach Anspruch 2, dadurch gekennzeichnet, daß das Überwachungsmodul (11) eine Zeitverzögerung (15, 17) enthält.

6. Schaltung nach Anspruch 1 bis 5, dadurch gekennzeichnet, daß die Aufladung der Zusatzbatterie (2) erst nach Erreichen der Nennspannung der Starterbatterie (1) erfolgt.

## Claims

1. Dual circuit power supply circuit for vehicles, especially for vehicles with a dual circuit electrical brake system (EBS), comprising a starter battery (1) and an accessory battery (2), wherein both batteries (1, 2) can be charged by a three-phase alternator (5) and wherein the three-phase alternator (5) contains power diodes (12) and excitation diodes (13), characterised in that, for charging, the accessory battery (2) is connected to the excitation diodes (13) via a line (14).

2. Circuit according to claim 1, characterised in that the accessory battery (2) is connected to the excitation diodes (13) via a monitoring module (11).

3. Circuit according to claim 2, characterised in that the monitoring module (11) contains a charging current limiter (16).

4. Circuit according to claim 2, characterised in that the monitoring module (11) contains a charging monitor (18).

5. Circuit according to claim 2, characterised in that the monitoring module (11) contains a time delay (15, 17).

6. Circuit according to any one of claims 1 to 5, characterised in that charging of the accessory battery (2) takes place only after the nominal voltage of the starter battery (1) has been reached.

## Revendications

1. Montage d'alimentation en courant électrique à deux circuits pour véhicules, en particulier pour véhicules comportant une installation de freinage électrique (EBS) à deux circuits, comprenant une batterie de démarreur (1) et une batterie additionnelle (2), dans lequel les deux batteries (1, 2) peuvent être chargées par un alternateur triphasé (5) et dans lequel l'alternateur triphasé (5) contient des diodes de puissance (12) et des diodes d'excitation (13), caractérisé en ce que la batterie additionnelle (2) est raccordée par une ligne (14) aux diodes d'excitation (13) en vue de sa charge.

2. Montage selon la revendication 1, caractérisé en ce que la batterie additionnelle (2) est raccordée aux diodes d'excitation (13) à travers un module de surveillance (11).

3. Montage selon la revendication 2, caractérisé en ce que le module de surveillance (11) contient un limiteur de courant de charge (16).

4. Montage selon la revendication 2, caractérise en ce que le module de surveillance (11) contient un dispositif de surveillance de charge (18).

5. Montage selon la revendication 2, caractérisé en ce que le module de surveillance (11) contient un dispositif de temporisation (15, 17).

6. Montage selon les revendications 1 à 5, caractérisé en ce que la charge de la batterie additionnelle (2) s'effectue seulement après que la batterie de démarreur (1) a atteint la tension nominale.
